# EUROPEAN PATENT APPLICATION

(11) **EP 4 011 567 A1**
(43) Date of publication of application: **15.06.2022**
(21) Application number: 20213759.2
(22) Date of filing: 14.12.2020
(51) Int. Cl.: B25J 9/16

(54) **ROBOT CONTROL**

(71) Applicant: Konica Minolta Business Solutions Austria GmbH, 1130 Wien (AT)
(72) Inventor: Ibrahimov, Bahadur, 1130 Wien (AT); Wachmann, Bernd, 1130 Wien (AT); Gomes Pereira, Joao, 1130 Wien (AT)
(74) Representative: Hoffmann Eitle

(57) **Abstract**

A robot control unit is operable to be programmed to control a robot to perform a routine comprising a series of actions. A voice processing unit is operable to process voice inputs from a user to identify voice command. A memory stores a set of rules, each rule defining one or more programming actions to be taken by the robot control unit in response to one or more voice commands from the user. A position determining unit is operable to determine from user input respective positions to be adopted by the robot during the series of actions. A controller operable is to associate a voice command identified by the voice processing unit with the one or more positions determined by the position determining unit, for each voice command, perform each programming action defined by the rules for that voice command, and store the positions in association with one or more robot commands defining one or more actions to be taken by the robot at each position during the routine.

## Description

### Technical Field

Example aspects herein relate generally to a robot control, and more particularly to a robot control unit that is operable to be programmed to control a robot to perform a routine comprising a series of actions.

### Background

Robotic devices are used in a large variety of applications within manufacturing, safety, military, medical, service and many other fields. Some robots can be pre-programmed to carry out desired tasks, whereas others are remote-controlled by a human operator.

Pre-programming robots can be costly and real-time remote control can cause delays and require a high level of dexterity of the operating expert. Today, the industry is shifting from expensive, bulky, and potentially dangerous robots to safer, cost-efficient and collaborative robots. This shift also creates cost efficiencies, enabling small and medium sized enterprises (SMEs) to use robots in their applications at lower overall cost, which in turn demands a cost-efficient way of deployment and programming. Users are demanding low-code programming, which needs less expertise and experience.

One way to achieve cost efficiencies in deployment and programming is to teach robots how humans complete a process. This generates a set of code which replicates human movement. This is sometimes known as "intuitive robot programming and control" and is becoming increasingly important, especially in use cases where the task of the robot is to assist a human being in specific processes. This collaboration between humans and robots has been made possible through a specific robot type which is known as a 'co-bot' or collaborative robot.

By the introduction of cobots, programming has become much easier since the code is generated by a specific movement by hand and saved or 'tagged' by the human user. Users can touch, grab, move, and save the positions and program by touching the robot, which was not possible with conventional industrial robot arms.

Conventionally, when executing assembly work by a collaborative robot, the position of a robot can be saved and adjusted either using a 'teach pendant' or by manual intervention and positioning through a positioning software tool by recording the point using a Graphical User Interface (GUI). Accordingly, positions (joint coordinates, Tool Centre Point (TCP) positions, waypoints, etc) of the workpiece are set manually and saved using the teach pendant or with an intermediate programming layer (Programmable Logic Controller algorithms, controller software and so on).

However, a knowledge of robot programming language is still a pre-requisite with these programming approaches, and the programming can still be complicated and time-consuming.

### Summary

According to a first example aspect, there is provided a robot control unit operable to be programmed to control a robot to perform a routine comprising a series of actions. The robot control unit comprises: a voice processing unit operable to process voice inputs from a user to identify voice commands; a memory storing a set of rules, each rule defining one or more programming actions to be taken by the robot control unit in response to one or more voice commands from the user; a position determining unit operable to determine from user input respective positions to be adopted by the robot during the series of actions; and a controller operable to: associate a voice command identified by the voice processing unit with the one or more positions determined by the position determining unit; for each voice command, perform each programming action defined by the rules for that voice command; and store the positions in association with one or more robot commands defining one or more actions to be taken by the robot during the routine.

The voice processing unit may be operable to identify voice commands by: comparing the voice input with a plurality of potential voice commands stored in a voice command library; and selecting the potential voice command that is determined to be the most similar to the voice input.

The voice command library may be a local voice command library that is part of the robot control unit, and the voice processing unit may be further operable to compare the voice input with potential voice commands in a remote voice command library that is separate from the robot control unit in response to determining that there is no matching voice command in the local voice command library.

The controller may be operable to output a response to the user in response to determining that there is no matching voice command in the remote voice command library.

The robot control unit may further comprise a response unit, and the controller may be operable to compare positions to be adopted by the robot obtained from the position determining unit with one or more pre-stored safety boundaries for the robot and to control the response unit to output a response if one or more positions is outside a pre-stored safety boundary.

The position determining unit may be operable to determine each respective position to be adopted by the robot during the series of actions by determining a position to which the user has manually moved at least a part of the robot.

The controller may be operable to store two or more of the positions in association with one or more robot commands defining one or more actions to be taken by an end of arm tool of the robot between the positions during the routine.

The controller may be further operable to cause the robot to perform the routine in response to user input.

According to a second example aspect, there is provided a method performed by a robot control unit to generate a control program to control a robot to perform a routine comprising a series of actions. The method comprises: processing voice inputs from a user to identify voice commands; determining from user input one or more respective positions to be adopted by the robot during the series of actions; associating an identified voice command with the one or more determined positions; performing, for each voice command, one or more programming actions defined by pre-stored programming rules; and storing the positions in association with one or more robot commands defining one or more actions to be taken by the robot during the routine.

According to a third example aspect, there is provided a computer program comprising computer-executable instructions which, when executed by one or more processors, cause the one or more processors to perform the method of the second example aspect.

### Brief Description of the Drawings

Example embodiments will now be described by way of example only, with reference to the accompanying figures, in which:
Figure 1 is a schematic block diagram of a robot;
Figure 2 is a schematic block diagram of a robot control unit;
Figure 3 is a schematic block diagram to illustrate operation of certain components of the robot control unit;
Figure 4 is a flow chart illustrating example operations performed by the robot control unit during programming;
Figure 5 is an illustration of an example robot arm to illustrate programming in accordance with an example embodiment;
Figure 6 is a diagram illustrating an example welding scenario to illustrate programming in accordance with an example embodiment;
Figure 7 is a flow chart summarising operations performed by example embodiments.

### Detailed Description

The inventor has devised a way of programming a robot using a series of voice commands input to a robot programming unit. As such, it is possible to for a user to program a robot even though the user may not have an in-depth knowledge of robot programming language. It also not necessary for the user to navigate through a potentially complicated user interface to input robot programming commands.

In the example embodiment which follow, methods are provided through which users can program a robot without having expertise in coordinate systems, robot programming, numerical methods, and coordinate systems. Effective robot programming may be effected through application of the user's own terms that may be understood by the robot.

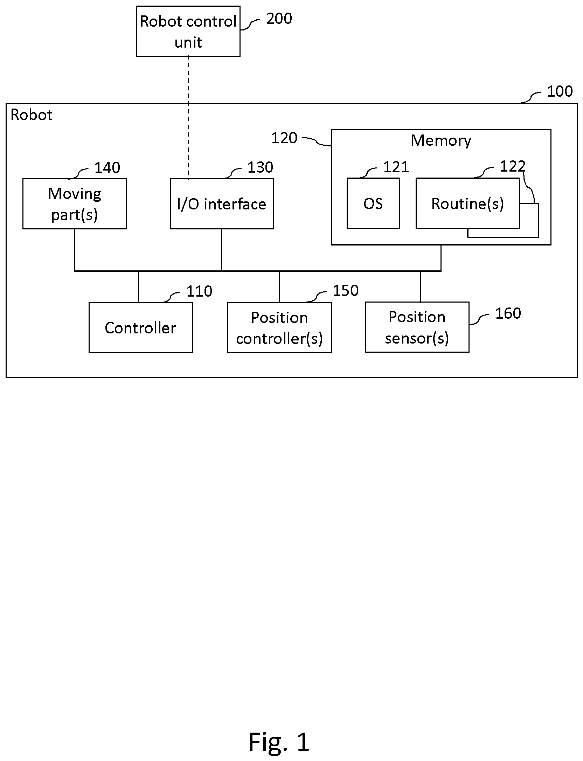

Figure 1 is a schematic block diagram illustrating the components of a robot 100 operable to be used in certain example embodiments. The robot 100 comprises a controller 110 operable to control the various operations of the robot 100. The controller 110 may be configured as one or more processors that execute code stored in a memory 120. The memory 120 may store a robot operating system 121 and one or more executable routines 122. As will be explained in more detail below, each routine 122 is generated by a robot control unit 200 in response to a series of voice commands from a user, and is transferred from the robot control unit 200 to the memory 120 of the robot 100. In the example embodiment shown in Figure 1, the robot 100 communicates with the robot control unit 200 via an input/output interface 130 with the generated routines 122 being stored in the memory 120 of the robot 100. Each routine 122 may be transferred from the robot control unit 200 to the robot 100 once the routine 122 has been generated or at run-time. In an alternative example embodiment, the robot control unit 200 may be integrated with the robot 100.

The robot 100 further comprises one or more moving parts 140, such as a robot arm. Such robot arm may be provided with an end of arm tool (EOAT) selected to perform one or more tasks, for example a welding tool, gripper, etc. Control of the moving part(s) and EOAT may be programmed using the robot control unit 200.

The robot 100 also comprises one or more position controllers 150 configured to send control signals or notifications to the moving parts 140 under the control of the controller 110. In example embodiments where the moving parts 140 comprise a robot arm having a series of movable joints between sections of the arm, one position controller 150 may be dedicated to each movable joint. A further position controller 150 may be provided to control the rotation of the base of the robot arm about an axis. By appropriate control of the position controllers 150 by the controller 110, the robot arm may be caused to adopt a position programmed by a user. To provide feedback, one or more position sensors 160 are provided. For example, a position sensor may be located at each joint of the robot arm to determine an angle between two sections of the arm that meet at that joint. A position sensor 160 may also be provided to detect an angle of rotation of the base of the arm about an axis. The interaction between position controllers 150 and position sensors 160 may form a servomechanism to maintain a desired robot position. The position controllers 150 and position sensors 160 may also be configured to control and sense a state of a robot tool. The state of a robot may be whether a particular robot tool has been activated, for example if the gripper of a robot arm has been activated.

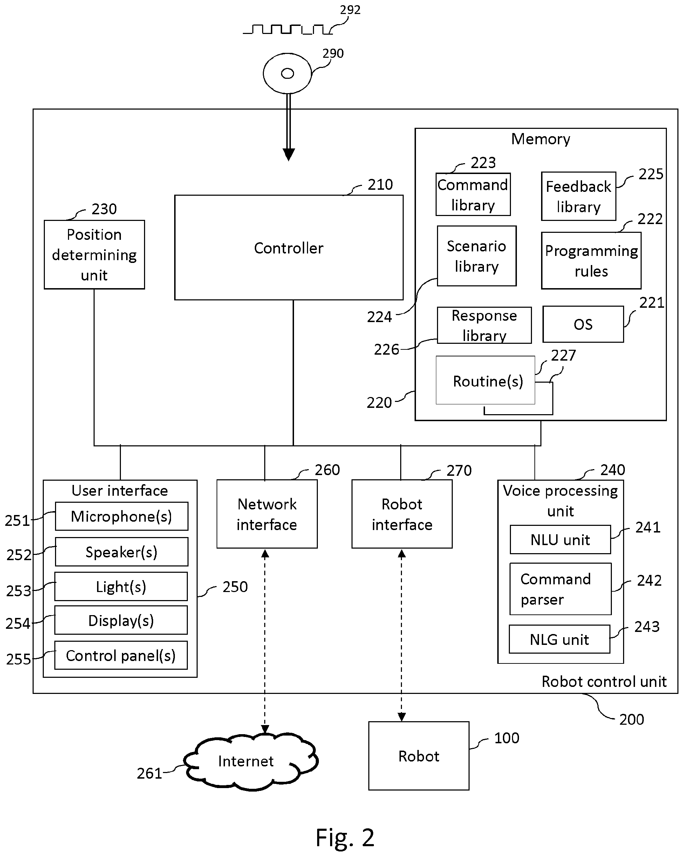

Figure 2 is a schematic block diagram illustrating functional components of a robot control unit 200. In this example embodiment, the robot control unit 200 is separate from the robot 100 and is configured to be in wireless or wired communication with the robot 100. The robot control unit 200 may be retrofitted to the robot 100. In other example embodiments, the robot control unit 200 may be part of, and fully integrated with, the robot 100 itself.

The robot control unit 200 comprises a controller 210. The controller 210 may comprise one or more processors that execute code stored in a memory 220, and is configured to control the robot control unit 200 in the execution of the specific steps executed by example embodiments described herein. The controller 210 may also be responsible for the general computing operations carried out by the robot control unit 200. Alternatively, the general computing operations may be executed by a separate controller.

The robot control unit 200 comprises a memory 220. The memory may store an operating system 221 and programming rules 222. The programming rules 222 define a set of actions that the controller 210 follows in response to a particular voice command in order to generate one or more corresponding robot commands to be incorporated into a routine 122 to be performed by the robot 100. Such rules may be pre-programmed into the memory 220 using a software development kit (SDK) or via a user interface such as a graphical user interface (GUI). The memory 220 further comprises libraries 223, 224, 225, 226 to assist the controller 210 in the performance of actions in accordance with example embodiments. A command library 223 is provided which may be pre-programmed to contain a list of potential voice commands. When a user voice input is detected, potential voice commands stored in the command library 223 are analysed to identify a voice command that best matches the detected voice input. The command library 223 stored in the memory 220 may be termed a local command library. In some embodiments, if it is determined that there is no suitable voice command stored in the local command library 223 then a remote command library may be accessed to obtain one or more suitable voice commands. The memory 220 also comprises a scenario library 224. The scenario library 224 contains information relating to particular scenarios that a particular programming routine may be directed towards addressing. For example, a scenario might be a welding scenario where a routine is required to be programmed so that a robot can complete a welding process over a set of given position. Information, for example safety parameters that must be followed when completing a welding process, may be stored in the scenario library 224. The memory 220 may also comprise a feedback library 225. The feedback library 225 contains information that is used by the controller 210 when analysing feedback code received from a robot 100 during programming. The memory 220 further comprises a response library 226. The response library 226 contains information that may be used by the controller 210 when generating a response based on robot feedback during the creation of the programming routine. Routines 227 comprising a set of robot commands may be stored in the memory 220. Such routines 227 may be partially complete or fully complete routines. Once a routine 227 has been completed it may be exported for storage in the memory 120 of the robot 100 as a routine 122.

The operating system 221, programming rules 222, command library 223, scenario library 224, feedback library 225 and response library 226 may be input to robot control unit 200 for example as data and executable instructions stored on a non-transitory storage medium 290, such as an optical disk (e.g. a CD-ROM, DVD-ROM, etc) or a magnetic computer storage device. In addition or instead, the operating system 221, programming rules 222, command library 223, scenario library 224, feedback library 225 and response library 226 may be input to robot control unit 200 for example as data and executable instructions carried by a computer-readable signal 292. Furthermore, artificial intelligence may be employed by the robot control unit 200 to generate content for the operating system 221, programming rules 222, command library 223, scenario library 224, feedback library 225 and/or response library 226. Content may also be provided via a software development kit (SDK) or user interface (GUI).

The robot control unit 200 comprises a position determining unit 230. The position determining unit 230 is configured to determine a position that is to be adopted by the robot 100 at various stages of the programming routine based on a user input. For example, the robot may be placed in a free-drive mode and the user may manually move the robot to a desired position which is saved as part of a routine. The position determining unit 230 may be configured to interface with the position sensors 160 of the robot 100 to obtain the position to which the robot has been placed by the user. The position determining unit 230 may also be configured to receive state information about the robot. State information may include information indicating that a robot tool (such as an end effector) has been activated, for example if the gripper of a robot arm has been activated. State information may include whether the robot is in free-drive mode. As will be explained hereinafter, the positions determined by position determining unit 230 are associated with a voice command and a corresponding resultant robot command to be saved as part of the routine.

The robot control unit 200 comprises a voice processing unit 240. The voice processing unit 240 is configured to process detected voice inputs to determine the content thereof. The voice processing unit 240 comprises a natural language understanding (NLU) unit 241 to process detected voice inputs to convert the detected speech to text. The voice processing unit 240 also comprises a voice command parser 242 configured to parse the text obtained from the NLU unit 241 and to determine one or more corresponding voice commands. The voice command parser 242 may identify potential voice commands stored in the command library 223 and determine which voice command is the most suitable. The identified voice command may then be provided to the controller 210 to generate one or more robot commands corresponding to the identified voice command. The voice processing unit 240 further comprises a natural language generation (NLG) unit 243. The NLG unit 243 is operable to receive generated responses from the controller 210 and to generate a natural language voice output. This allows feedback to be converted to a natural language response that may be output to a user. The functionality of the voice processing unit 240 thus allows for a natural interaction between the user and the robot control unit to allow the robot to be programmed.

The robot control unit comprises a user interface 250. The user interface 250 comprises elements which allow the user to input instructions into the robot control unit 200 and elements to provide output to the user. The user interface 250 comprises one or more microphones 251 and one or more speakers 252. The microphones 251 and speakers 252 interact with the voice processing unit 240 so that the microphones 251 provide a voice input to the voice processing unit 240 and the speakers 252 provide an output. In addition to outputting synthesised speech, the speakers 252 may be further configured to outputting an electronic bleeping sound to indicate a positive or negative response. The user interface 250 may also comprise one or more lights 253 suitable for outputting signals such as a red light to indicate a negative response or a green light to indicate a positive response. The user interface 250 also comprises one or more displays 254 for displaying information and one or more control panels 255. The display 254 may show a program tree corresponding to the routine as it is being created with the addition of successive robot commands to the routine. The control panel 255 may comprise one or more input buttons such as a free drive button for placing the robot into a free drive mode so that the robot can be positioned manually by a user. Additional buttons may include one or more of a push-to-talk button to activate a microphone 251 and start/stop/OK buttons to input respective commands to the robot control unit 200. The control panel 255 may additionally comprise a keyboard. The control panel 255 may be integrated with the display 254 to function as a touchscreen display. While the user interface 250 has been shown to be a component of the robot control unit 200 in the present example embodiment, it should be borne in mind that one or more of the components of the user interface 250 may be implemented as part of the robot 100 itself.

The robot control unit 200 also comprises a network interface 260 so that the robot control unit 200 can connect to a network such as the internet 261 or an alternative network such as an intranet. The interface may be a wired or wireless interface.

The robot control unit 200 further comprises a robot interface 270 to interact with the robot 100.

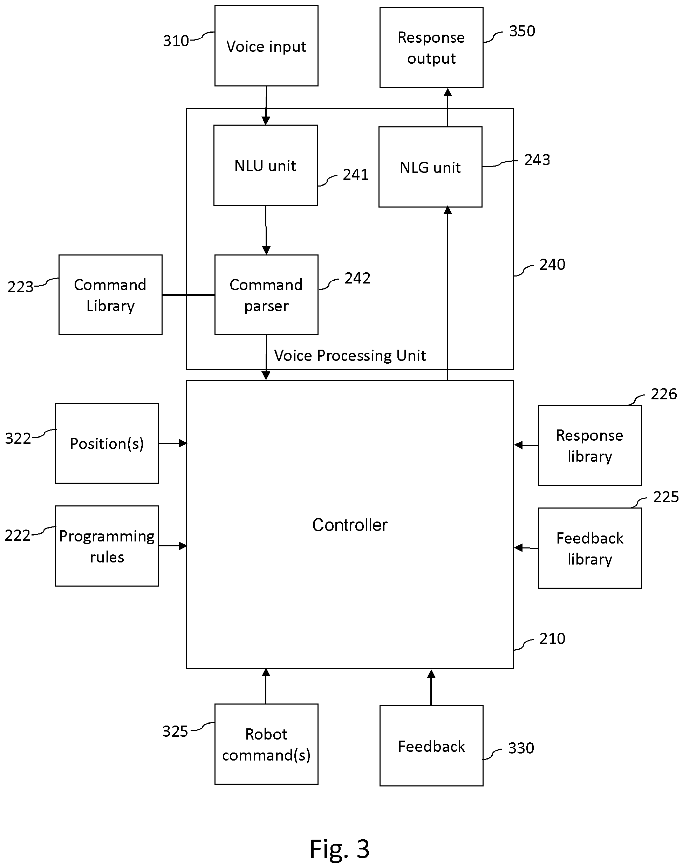

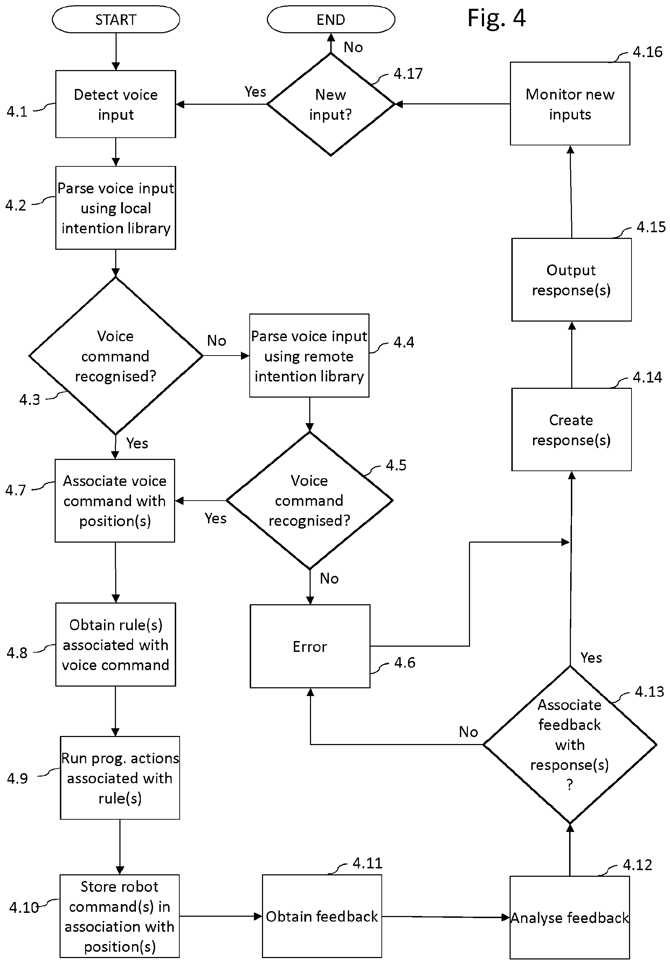

Figure 3 is a schematic block diagram illustrating how elements of the robot control unit 200 interact to process a voice input, determine one or more voice commands and, from the voice command(s), generate one or more corresponding robot commands. The resultant robot commands together form the routine which may then be stored at the robot for subsequent execution by the robot. Also illustrated in Figure 3 is the interaction of components of the robot control unit 200 to produce a response which may be output to a user indicative of feedback received from the robot during programming thereof. The operations performed by the components will be described with reference to the flow chart shown in Figure 4.

At step 4.1 shown in Figure 4 and also shown in Figure 3, a voice input 310 is detected. The voice input 310 is received by a microphone 251 and a signal corresponding to the voice input is sent to the NLU unit 241 of the voice processing unit 240. The voice input may be a user utterance containing one or more commands that that user would like to be incorporated into the routine. The NLU unit 241 interprets the voice input and converts the received signal into text which is then sent to the command parser 242 of the voice processing unit 240.

At step 4.2, the command parser 242 parses the text from the NLU unit 241 to determine one or more voice commands. The command parser 242 may consult the command library 223 which contains one or more potential voice commands. The command parser 242 receives input from the command library 223 containing one or more potential voice commands. The command parser 242 may compare the text obtained from the NLU unit 241 with the one or more voice commands stored in the command library. If there is more than one command that could be identified with the voice input then the command considered to be most similar to the voice input may be selected. This may be determined by calculating a respective similarity score between the input and each potential command with the command having the highest similarity score being selected.

At step 4.3, the command parser 242 determines if a voice command has been recognised. If no suitable voice command can be identified from the command library 223 stored locally in the memory 220 of the robot control unit 200, then a remote command library may be consulted at step 4.4. In this case the remote command library may be accessed via the network interface 260. The determination that there are no suitable voice commands stored locally at the command library 223 of the memory 220 may be made if none of the commands stored at the command library has a similarity score above a pre-determined threshold. At step 4.5 the command parser 242 determines if a voice command has been recognised from the remote command library. If no voice command is recognised at step 4.5 then an error may be recorded at step 4.6, and processing proceeds to step 414 (described below) to create and output a response to the user.

If a voice command is recognised at either step 4.3 or step 4.5 then the identified voice command is provided to the controller 210. At step 4.7, the controller 210 associates the voice command identified by the voice processing unit 240 with one or more positions 332 determined by the position determining unit 230.

At step 4.8, the controller 210 consults the programming rules 222 stored in the memory 220 to identify one or more programming actions. As explained above, the programming rules 222 define one or more programming actions to be taken by the controller 210 for each voice command in order to generate one or more robot commands corresponding to the identified voice command. The controller 210 identifies the one or more programming actions for the voice command recognised at step 4.3 or step 4.5 and then executes the programming action(s) at step 4.9.

The rules defining the programming actions to be taken may be pre-programmed using a software development kit (SDK) or an interface such as a GUI. The rules provide a framework to convert a voice input from a user who may not be experienced with robot coding language into a robot command that can be executed by a robot as part of a routine to be performed by the robot 100.

The one or more robot commands 325 that are generated are stored at step 4.10 in association with the one or more positions determined by the position determining unit 230. The robot command(s) 325 may be added to a routine 227 stored in the memory 220 of the robot control unit 200. Completed routines may be exported to the memory 120 of the robot 100.

In addition to the creation of robot commands 325 to be added to routines to be performed by a robot 100, the controller 210 is also configured to generate output responses to a user indicating, *inter alia,* feedback received from the robot 100 during the programming thereof.

Referring to Figure 3, as the robot 100 is being programmed to perform a particular routine, a robot command 325 may be provided from the robot control unit 200 to the robot 100, and feedback 330 may be generated by the robot 100 and provided to controller 210 via robot interface 270. In addition, or instead, controller 210 may compare a robot command 325 to one or more rules stored in the memory 220 of the robot control unit 200, such as safety rules, to obtain feedback 330. This corresponds to step 4.11 in Figure 4. Such feedback may then be converted by the controller 210 to a response to be output to the user. The response may be in the form of a synthesised voice output, an audio electronic output such as a bleeping sound or the response may take the form of the illumination of one or more lights, such as a green light indicating positive response or a red light indicating a negative response. The response may take the form of a combination of any of these outputs.

Feedback 330 may be positive feedback indicating that a particular robot command 325 is compatible with one or more safety parameters that might be associated with a routine. Alternatively, feedback 330 may be negative feedback. Negative feedback may arise if a user voice command or a position to be adopted by the robot during the routine does not comply with a safety parameter for the routine. Negative feedback may be produced if one or more voice commands does not comply with the programming logic. For example, a command instructing the robot to stop welding received before a command to start welding might receive negative feedback so that that command is not added to the routine.

At step 4.12, the controller 210 analyses the feedback 330 using feedback library 225. Feedback entries may be pre-programmed into the feedback library 225. The controller 210 can convert feedback codes received from the robot to a format that is more easily understandable to a user using the entries contained in the feedback library 225. For example, after an action the robot may send a notification in code such as such as F/D_1 or TCP:[x, y, z]. The feedback library 225 may be consulted to turn these codes into feedback such as "Freedrive is on"; "New position is XYZ".

Once the feedback has been analysed, controller 210 determines (at step 4.13) whether the feedback can be associated with one or more responses stored in the response library 226. For example, in the event of positive feedback being analysed then the response creator may retrieve a positive response from the response library 226. Alternatively, if the analysed feedback is negative then the response creator 343 may retrieve an appropriate negative response to output to the user. If the response creator 343 cannot associate the analysed feedback with a response then (at step 4.6) an error is recorded.

At step 4.14, controller 210 creates a response to be output to the user. Where a synthesised voice output is to be provided, controller 210 may retrieve appropriate text from the response library 226. This text may then be provided to the NLG unit 243 of the voice processing unit 240. A response output 350 may then be provided to the user via the speakers 252 of the robot control unit 200.

Additionally or alternatively, the robot control unit 200 may output a positive or negative response by causing a green or red light to be illuminated indicating a positive or negative response respectively. Additionally or alternatively, an electronic bleeping sound may also be output to indicate the response.

Referring to the example given above, the response library 226 may be consulted so that a suitable response can be created and output based on the feedback. The feedback obtained from feedback codes received from the robot such as "Freedrive is on"; "New position is XYZ" may be converted to a synthesised voice response such as "Freedrive is on, please hold the robot, you can show me positions now" or "New Position is saved, please show me next position". Another response might be to send an instruction to the user interface to turn the red light on or to turn on the green light and bleep three times. These instructions may then be executed by the respective component(s) of the user interface.

In addition to outputting responses indicating whether a particular robot command has been added to the routine, as the routine is created a visual representation of the corresponding program tree may also be created and output to the user via a GUI. This provides the user with real-time and intuitive information regarding the creation of the routine.

The response may then be output. This step corresponds to step 4.15 in Figure 4.

The controller 210 monitors for further user inputs at step 4.16. While this step is shown occurring after the previous response has been output, it should be noted that monitoring of further inputs may be performed continuously so that multiple user inputs may be processed in parallel.

In response to there being a further input at step 4.17 the process returns to step 4.1.

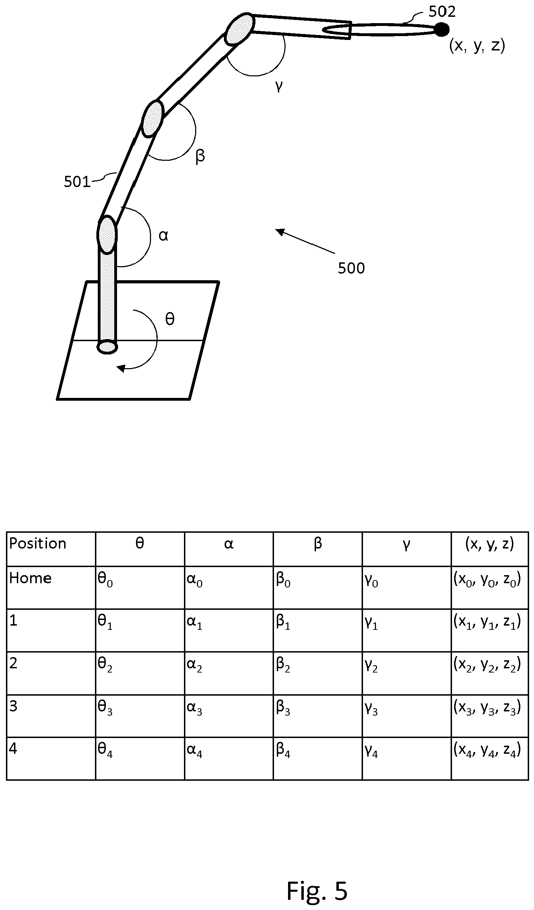

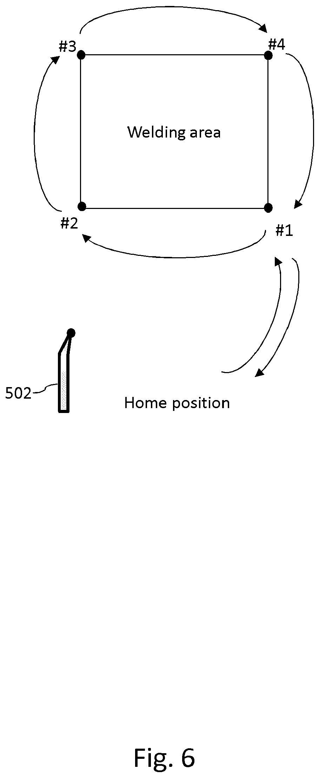

An example scenario will now be described to further assist the reader with reference to Figures 5 and 6. Figure 5 shows a robot 500 comprising a robot arm 501. The robot 500 has an end of arm tool 502 located at a distal end of the robot arm 501. In this example, the end of arm tool 502 is a welding tool. The robot arm 501 comprises several sections where each section is joined to a neighbouring section via a movable joint. Each joint is movable and may be controlled by a position controller such as the position controllers 150 shown in Figure 1 to a respective angle [alpha], [beta] and [gamma]. The base of the of the robot arm 501 may be rotated about an vertical axis to an angle [theta] with respect to a reference point. The rotation of the base of the arm may likewise be controlled by a respective position controller 150. The angles [theta] [alpha], [beta] and [gamma] are determined by respective position sensors such as the position sensors 160 shown in Figure 1.

By suitable control of the respective position controllers 150, the tip of the welding tool 502 can be made to adopt any position (x, y, z) in Cartesian coordinates. Multiple positions, such as a home position, position #1, position #2, position #3 and position #4 can be defined and saved in the memory of the robot.

The welding tool 503 can be activated and deactivated under the control of a controller such as the controller 110 shown in Figure 1. A routine may be created by robot control unit 200 in which the robot is programmed to adopt a series of positions and to carry out various commands associated with those positions. The robot can be programmed to save particular positions, to move linearly from one position to a subsequent position and to start and stop welding at particular positions. The routine containing the specific series of actions to be performed by the robot can be saved and stored in the memory (such as the memory 120 shown in Figure 1) of the robot. Once programmed, the robot can access a particular routine for execution.

An example procedure for programming the robot 500 to create a routine will now be described with reference to Figure 6. In this example a user wishes to create a welding routine where the robot is programmed to adopt a home position, move to a first position, start welding, follow a path comprising multiple other positions as waypoints, return to the first position, stop welding and then return to the home position. The robot has a free-drive mode functionality whereby, in response to a user activation of this mode, the robot enters a mode in which it can be moved manually by a user to a desired position. In free-drive mode the resistance of the robot arm is reduced significantly to allow manual manipulation of the robot arm to a desired position. Position sensors, such as position sensors 160, determine the angles theta, alpha, beta and gamma at each position to which the user moves the robot arm in the free-drive mode. A voice command can then be issued to save each desired position. Further voice commands can be issued to program the robot to perform a series of actions that form the routine, where each voice command is associated with a position.

The creation of the routine can be achieved via a spoken interaction between the user and the robot control unit. An example interaction is given below whereby a user provides a spoken input to the robot control unit. The robot control unit is operable to interpret the voice input to determine one or more voice commands. Once a voice command has been determined the robot control unit is configured to follow one or more programming rules.

| | |
|---|---|
| **Robot control unit** | *--(waits for HOTWORD-Input)--* |
| **User** | **Hello Marvin** |
| **Robot control unit** | Hello, what can I do for you? |
| **User** | Today **we are going to do a welding process.** |
| **Robot control unit** | *[sends command: Start New Program Tree, Name "Welding Process", Activate Free-Drive]* |
| **Robot control unit** | *[receives notification]* |

In the above exchange, the robot control unit detects input via its microphone(s) of a spoken hotword which in this example is "Hello Marvin". In response to this hotword, the robot control unit is activated. The user voice command "Today we are going to do a welding process" is detected, parsed and compared to commands in the command library 223 by the robot control unit to identify the command as a command to initiate a new program tree named "Welding Process". Furthermore, the robot control unit determines (by looking up the programming rules associated with the identified command in the programming rules 222) the programming actions to be performed in response to the command. In response to this determination, the controller 210 performs the associated programming actions (defined by the programming rules) of: *send command: Start New Program Tree, Name "Welding Process", Activate Free-Drive.* The robot control unit receives notification that these actions have been completed. This notification that the actions have been completed may comprise new positions of the robot in the form of feedback code provided to the robot control unit. In other words, the notification may comprise position codes, error code, or status codes.

| | |
|---|---|
| **Robot control unit** | Now you can show me the positions. |
| **User** | *[moves robot arm to a position]* |
| **Robot control unit** | *[receives notification]* |
| **User** | **Save** this **position** as **home** position. |
| **Robot control unit** | *[sends command: Save Waypoint* - *Current TCP Coordinates, Name "Waypoint-HOME"]* |
| **Robot control unit** | *[receives notification]* |

The robot control unit then generates and synthesises a spoken response asking the user to show the robot control unit the positions to be adopted during the routine. As the robot has been placed in the free drive mode, the user is able to move the robot arm to a desired position. The robot control unit receives a notification once the user has moved the robot arm. The notification may contain new position coordinates in the form of feedback code indicating the position of the robot. The user then issues a spoken command to "Save this position as home position". This voice input is parsed and compared to potential voice commands stored in the command library 223 to determine the appropriate voice command. The robot control unit follows the programming actions defined by the programming rules for that command and the following actions are performed: *sends command: Save Waypoint* - *Current TCP Coordinates, Name "Waypoint-HOME"].* The robot control unit receives notification from the robot when this has been completed. This notification may be in robot code in the form of coordinates or state, coming from the robot controller 110, to be turned into feedback and then from feedback to an appropriate response.

| | |
|---|---|
| **Robot control unit** | Saved. What is next? |
| **User** | *[moves robot arm to a position]* |
| **Robot control unit** | *[receives notification]* |
| **User** | **Go** to this **position** and **save it.** |
| **Robot control unit** | *[sends command: Add Motion (MoveJ), Save waypoint* - *current TCP Coordinates, Name Waypoint _1]* |
| **Robot control unit** | *[receives notification]* |

The robot control unit outputs a spoken response indicating that the previous command has been saved. The user then moves the arm to position #1 shown in Figure 6. The robot control unit receives a notification that the robot arm has been moved. Again, the notification received from the robot 100 provides an indication of the position and state of the robot in the form of feedback code. The user issues a spoken command: "Go to this position and save it." This voice input is parsed to obtain a voice command and then the programming actions associated with the voice command are determined from the programming rules. The following programming actions are then performed in accordance with the programming rules for that voice command: *[sends command: Add Motion (MoveJ), Save waypoint* - *current TCP Coordinates, Name Waypoint_1]. "]*. The robot control unit receives notification when this has been completed. Again, the notification may comprise the new position of the robot in the form of feedback code which can be converted to appropriate feedback and a corresponding response.

| | |
|---|---|
| **Robot control unit** | Saved. What is next? |
| **User** | **Start welding.** |
| **Robot control unit** | *[sends command: Activate End Effector: Welding_ On]* |
| **Robot control unit** | *[receives notification]* |

The robot control unit then outputs a spoken response indicating the previous command has been saved and requesting the next input. The user issues the command "Start Welding" which is processed to identify the command and the associated programming actions in the same way as described above. The robot control unit then performs the following programming action defined by the programming rules for that voice command: *[sends command: Activate End Effector: Welding_On].* It will be understood that the logic of the programming language means that the command "Start Welding" is associated with the current position of the robot arm, namely position #1. The robot control unit receives a notification that the command has been completed. The notification may comprise robot position and a state code, created by the robot controller 110, indicating that the end effector state is "On". This notification may then be used to create feedback and a corresponding response using the respective feedback and response libraries.

| | |
|---|---|
| **Robot control unit** | Saved. What is next? |
| **User** | *[moves robot arm to a position]* |
| **Robot control unit** | *[receives notification]* |
| **User** | **Move linear** to **this position** and **save this position.** |
| **Robot control unit** | *[sends command: Add Linear Motion (MoveL), Add waypoint* - *save current TCP Coordinates, name: Waypoint_2]* |
| **Robot control unit** | *[receives notification]* |

The robot control unit outputs a spoken response indicating the previous command has been saved and requesting the next input. The user then moves the robot arm to position #2 and issues the commands "Move linear to this position and save this position." This voice input is parsed and recognised as containing two separate voice commands. The programming actions performed by robot control unit for these commands in accordance with the programming rules for those voice commands are: *[sends command: Add Linear Motion (MoveL), Add waypoint* - *save current TCP Coordinates, name: Waypoint_2].* The robot control unit receives notification when this has been completed containing code indicating the robot position which may then be converted into feedback and a corresponding response using the respective feedback and response libraries.

| | |
|---|---|
| **Robot control unit** | Saved. What is next? |
| **User** | *[moves robot arm to a position]* |
| **Robot control unit** | *[receives notification]* |
| **User** | **Move linear** to **this position** and **save this position.** |
| **Robot control unit** | *[sends command: Add Linear Motion (MoveL), Add waypoint* - *save current TCP Coordinates, name: Waypoint_3]* |
| **Robot control unit** | *[receives notification]* |

The processes above are the same as the previous processes, except this time, the user moves the robot arm to position #3 in Figure 6.

| | |
|---|---|
| **Robot control unit** | Saved. What is next? |
| **User** | *[moves robot arm to a position]* |
| **Robot control unit** | *[receives notification]* |
| **User** | **Save this position** as **linear move.** |
| **Robot control unit** | *[sends command: Add Linear Motion (MoveL), Add waypoint* - *save TCP Coordinates, name Waypoint _4]* |
| **Robot control unit** | *[receives notification]* |

The processes above are the same as the previous ones, except this time, the user moves the robot arm to position #4 in Figure 6.

| | |
|---|---|
| **Robot control unit** | Saved. What is next? |
| **User** | **Go** to **waypoint one as Linear Move. Stop welding.** And **Go home.** And **wait Five seconds.** |
| **Robot control unit** | *[sends command: Add Linear Motion (MoveL); Add Waypoint 5 = Waypoint 1; Activate End Effector: Welding Off; Add Waypoint 6= Waypoint "Home"; Wait: 5s.]* |
| **Robot control unit** | *[receives notification]* |

The robot control unit outputs a spoken response indicating the previous command has been saved requesting the next input. Further voice commands are then issued by the user ordering the robot to return linearly to position #1, to stop welding, to return to the home position and to wait 5 seconds. These voice inputs are parsed and lead to the following programming actions being followed in accordance with the rules for those commands: *[sends command: Add Linear Motion (MoveL); Add Waypoint 5 = Waypoint 1; Activate End Effector: Welding Off; Add Waypoint 6=Waypoint "Home"; Wait: 5s.].* The robot control unit then receives notification that these instructions have been completed. The notification may contain robot coordinates and a state code, created by the robot controller, that the end effector state is "Off".

In this example, the final step has been programmed and the routine has been completed. The routine can be stored in the memory 220 of the robot control unit 200 in association with the routine name "Welding Process". Additionally or alternatively, the routine may be stored in the memory 120 of the robot 100.

| | |
|---|---|
| **Robot control unit** | Saved. What is next? |
| **User** | **Perform** the **Welding Process.** |
| **Robot control unit** | *[sends command:, deactivate Free-drive; Run Welding Process program]* |
| **ROBOT** | *[performs welding process]* |

The user issues a voice command instructing the robot to perform the welding process. The robot parses the voice input to recognise the command and performs the previously-programmed series of saved robot commands to carry out the welding routine.

The following exchange between the user and robot control unit illustrates a scenario wherein an error is encountered because, during the programming, the user moves the robot arm to a position which is outside a virtual safety boundary of the robot 500 that has previously been stored in the robot control unit 200 and/or robot 100.

| | |
|---|---|
| **User** | *[moves robot arm to a position out of the virtual safety boundary]* |
| **User** | **Go to** this **position** as a **linear move** and **save it.** |
| **Robot control unit** | *[sends command: Add Linear Motion (MoveL), Add waypoint* - *save TCP Coordinates, name "Waypoint-n"]* |
| **Robot control unit** | *[receives notification* - *Error message: TCP Coordinates is outside of Safety boundary]* |
| **Robot control unit** | *[sends command: UnDo]* |
| **Robot control unit** | *This command cannot be done for safety reasons. Please make sure this position is safe and changed the safety settings. Or create a new waypoint within the security boundary.* |

The robot control unit checks the position input by the user against the stored virtual safety boundary and determines that the position is outside the virtual safety boundary. Accordingly, the robot control unit does not perform the programming actions associated with the user's command, and instead outputs a voice message asking the user either to change the virtual safety boundary or to choose a different position.

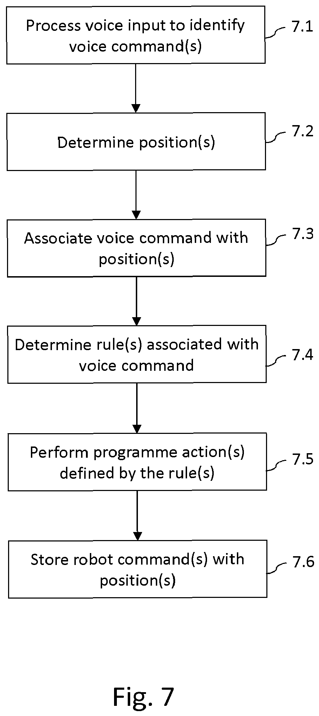

Figure 7 is a flow chart summarising the steps taken by embodiments of the present invention. At step 7.1 a voice input is processed to identify a voice command. At step 7.2 a position to be adopted by the robot when executing an action is determined. At step 7.3 an association is created between the voice command(s) and the position(s) to be adopted by the robot. At step 7.4 one or rules associated with the voice command are determined. Programming actions in accordance with the rules are performed at step 7.5. Executing the programming actions yields one or more robot commands. The one or more robot commands are stored together with their associated position(s) at step 7.6.

It will be understood that the robot control unit 200 is programmed to perform the steps above by computer-readable processing instructions, which may be input for example on non-transitory storage medium 290 and/or signal 290.

While specific embodiments have been described herein, it will be apparent to the skilled person that many variations and modifications may be made without departing from the scope of the invention which is defined by the appended claims.

The example aspects described here avoid limitations, specifically rooted in computer technology, relating to the programming and control of robots. By virtue of the example aspects described herein, the programming of a robot may be improved. Also, by virtue of the foregoing capabilities of the example aspects described herein, which are rooted in computer technology, the example aspects described herein improve robots.

In the foregoing description, example aspects are described with reference to several example embodiments. Accordingly, the specification should be regarded as illustrative, rather than restrictive. Similarly, the figures illustrated in the drawings, which highlight the functionality and advantages of the example embodiments, are presented for example purposes only. The architecture of the example embodiments is sufficiently flexible and configurable, such that it may be utilized in ways other than those shown in the accompanying figures.

Software embodiments of the examples presented herein may be provided as, a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the example embodiments described herein. Such software may include without limitation device drivers, operating systems, and user applications. Ultimately, such computer-readable media or storage device(s) further include software for performing example aspects of the invention, as described above.

Included in the programming and/or software of the system are software modules for implementing the procedures described herein. In some example embodiments herein, a module includes software, although in other example embodiments herein, a module includes hardware, or a combination of hardware and software.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above described example embodiments, but should be defined only in accordance with the following claims and their equivalents.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that any procedures recited in the claims need not be performed in the order presented.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments and embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description, and changes that come within the meaning and range of equivalence of the claims are embraced therein.

## Claims

1. A robot control unit operable to be programmed to control a robot to perform a routine comprising a series of actions, the robot control unit comprising:
a voice processing unit operable to process voice inputs from a user to identify voice commands;
a memory storing a set of rules, each rule defining one or more programming actions to be taken by the robot control unit in response to one or more voice commands from the user;
a position determining unit operable to determine from user input respective positions to be adopted by the robot during the series of actions; and
a controller operable to:
associate a voice command identified by the voice processing unit with the one or more positions determined by the position determining unit;
for each voice command, perform each programming action defined by the rules for that voice command; and
store the positions in association with one or more robot commands defining one or more actions to be taken by the robot during the routine.

2. The robot control unit of claim 1, wherein the voice processing unit is operable to identify voice commands by:
comparing the voice input with a plurality of potential voice commands stored in a voice command library; and
selecting the potential voice command that is determined to be the most similar to the voice input.

3. The robot control unit of claim 2, wherein the voice command library is a local voice command library that is part of the robot control unit, and wherein the voice processing unit is further operable to compare the voice input with potential voice commands in a remote voice command library that is separate from the robot control unit in response to determining that there is no matching voice command in the local voice command library.

4. The robot control unit of claim 3, wherein the controller is operable to output a response to the user in response to determining that there is no matching voice command in the remote voice command library.

5. The robot control unit of any preceding claim further comprising a response unit, and wherein the controller is operable to compare positions to be adopted by the robot obtained from the position determining unit with one or more pre-stored safety boundaries for the robot and to control the response unit to output a response if one or more positions is outside a pre-stored safety boundary.

6. The robot control unit of any preceding claim, wherein the position determining unit is operable to determine each respective position to be adopted by the robot during the series of actions by determining a position to which the user has manually moved at least a part of the robot.

7. The robot control unit of any preceding claim, wherein the controller is operable to store two or more of the positions in association with one or more robot commands defining one or more actions to be taken by an end of arm tool of the robot between the positions during the routine.

8. The robot control unit of any preceding claim, wherein the controller is further operable to cause the robot to perform the routine in response to user input.

9. A method performed by a robot control unit to generate a control program to control a robot to perform a routine comprising a series of actions, the method comprising:
processing voice inputs from a user to identify voice commands;
determining from user input one or more respective positions to be adopted by the robot during the series of actions;
associating an identified voice command with the one or more determined positions;
performing, for each voice command, one or more programming actions defined by pre-stored programming rules; and
storing the positions in association with one or more robot commands defining one or more actions to be taken by the robot during the routine.

10. The method claim 9, wherein processing voice inputs from a user to identify voice commands comprises:
comparing each voice input with a plurality of potential voice commands stored in a voice command library; and
selecting the potential voice command that is determined to be the most similar to the voice input.

11. The method of claim 9, wherein the voice command library is a local voice command library that is part of the robot control unit, and wherein the method further comprises comparing a voice input with potential voice commands in a remote voice command library that is separate from the robot control unit in response to determining that there is no matching voice command in the local voice command library.

12. The method of claim 11, further comprising outputting a response to the user in response to determining that there is no matching voice command in the remote voice command library.

13. The method of any one of claims 9 to 12, further comprising comparing positions to be adopted by the robot with one or more pre-stored safety boundaries for the robot and outputting a response if one or more positions is outside a pre-stored safety boundary.

14. The method of any one of claims 9 to 13, wherein determining each respective position to be adopted by the robot during the series of actions comprises determining a position to which the user has manually moved at least a part of the robot.

15. A computer program comprising computer-executable instructions which, when executed by one or more processors, cause the one or more processors to perform the method of at least one of claims 9 to 14.
